# EUROPEAN PATENT SPECIFICATION

(11) **EP 3 746 492 B1**
(45) Date of publication and mention of the grant of the patent: **26.10.2022**
(21) Application number: 19701394.9
(22) Date of filing: 30.01.2019
(51) Int. Cl.: C08F 255/08, C08F 210/16, C08L 23/26, C08L 51/06, C09J 151/06

(54) **COUPLING AGENT**
KUPPLUNGSMITTEL
AGENT DE COUPLAGE

(30) Priority: 30.01.2018 EP 18154240
(43) Date of publication of application: 09.12.2020
(73) Proprietor: Borealis AG, 1020 Vienna (AT)
(72) Inventor: NUMMILA-PAKARINEN, Auli, 06101 Porvoo (FI); SUNDHOLM, Tua, 06101 Porvoo (FI); TAHVANAINEN, Hannu Kalervo, 06101 Porvoo (FI); POLIAKOVA, Valeria, 00960 Helsinki (FI)
(74) Representative: Dehns
(86) International application number: PCT/EP2019/052278
(87) International publication number: WO 2019/149768

(56) References cited:
- EP-A1- 1 316 598
- EP-A1- 3 053 976
- WO-A1-2017/207221
- WO-A2-2009/103516
- M. TERESA RODRÍGUEZ-HERNÁNDEZ ET AL: "Determination of the molecular characteristics of commercial polyethylenes with different architectures and the relation with the melt flow index", JOURNAL OF APPLIED POLYMER SCIENCE, vol. 104, no. 3, 5 May 2007 (2007-05-05), pages 1572-1578, XP055492539, ISSN: 0021-8995, DOI: 10.1002/app.25625

## Description

### Field of the Invention

This invention relates to a novel coupling agent, in particular to a coupling agent which is a multimodal linear low-density polyethylene (LLDPE) which has been grafted with an acidic grafting agent. The invention further relates to composite materials comprising said coupling agent and to the use of the grafted multimodal LLDPE (g-LLDPE) as a coupling agent in a composite material.

### Background

Composite materials are materials comprising two or more constituent materials which typically have quite different physical and/or chemical properties. When brought together, these constituent materials produce a new material with characteristics which are different from the individual components and which tend to offer particular advantages in certain applications. For example, composite materials may be stronger, stiffer, softer, lighter, heavier or have other desired properties when compared to individual constituents. Concrete is perhaps one of the best known composite materials, however plastics provide countless other examples which find application in a vast range of end uses including aerospace components (tails, wings, fuselages, propellers), boat and scull hulls, bicycle frames, racing car bodies, fishing rods, storage tanks, swimming pool panels, baseball bats, solar panels, spacecraft, sound dampening, packaging materials, and pipes and fittings for various purpose such as transportation of drinking water, fire-fighting, irrigation, seawater, desalinated water, chemical and industrial waste, and sewage.

However, as a result of the differing properties of the individual constituents in the composite material, there is a tendency for them to remain separate and distinct within the finished structure. This incompatibility between components means that the final material has the potential to suffer from deteriorated properties, like poor mechanical properties, such as poor impact strength. In order to go some way to tackle this issue, coupling agents are often added to the material. These agents are compounds which are able to improve the property of the interface between different constituents, such as different polymeric materials and fillers, i.e. they provide a bond, e.g. a chemical or physical bond, between dissimilar components, helping to provide a more homogenous material.

Numerous coupling agents are known and are commercially available. It will be appreciated that appropriate coupling agents are selected based on the constituents of the particular composite material. Known coupling agents include organosilanes, organotitanates, fatty acid esters and functionalised polyolefins.

In the plastics industry, functionalised polyolefins are receiving increasing interest as potential coupling agents. Polyolefins containing polar or reactive groups, can be made by grafting polar monomers, such as maleic anhydride, onto the polyolefin. Polyolefins used for grafting are typically unimodal polyolefins. Various grafting techniques are well known to those skilled in the art, including solution grafting using peroxide initiation, solid-state grafting using peroxide or radiation initiation, and reactive extrusion in a twin-screw extruder, usually using peroxide initiation. Alternatively, polyolefins containing polar or reactive groups, can be made by copolymerizing at least one olefin monomer with at least one polar monomer, for example, maleic anhydride. These polyolefins with reactive groups effectively serve as a transitional bridge between the polar and non-polar constituents which are routinely employed in plastic materials, particular those for use in food packaging. For example, ethylene vinyl alcohol (EVOH) and polyamide (PA) are typically employed to provide attractive properties to the packaging. Moreover, EVOH acts as an oxygen barrier whilst PA provides good mechanical and barrier properties. These polar polymers are, however, quite incompatible with polyolefins which tend to form the base polymer of the packaging material. The coupling agent serves to improve the compatibility of the constituents, leading to more homogenous materials.

Coupling agents also find application as tie layer materials or components thereof in multilayer products, such as laminates, where adhesion of layers of differing properties needs to be improved, although the requirements for tie layer materials are often more stringent because properties such as softness and even branching distribution are important.

Using MAH (maleic anhydride) grafted polyethylene or polypropylene compositions as a tie layer material is well known. WO 99/37730 discloses an adhesive composition comprising an ethylene copolymer component and from 2 to 35 wt % of a grafted metallocene polyethylene. WO 03/046101 is another example and describes an adhesive polymer composition comprising a blend of an elastomeric ethylene copolymer with a non-elastomeric polyethylene wherein at least one of these components has been grafted with an acid grafting agent.

The possibility to recycle plastic articles, especially articles for plastic packaging and multilayer plastic packaging articles made of or comprising composite materials, is becoming an important requirement. For the preparation of composite materials, coupling agents are needed to allow incompatible constituents to be mixed with each other. Typically, it is desired that the properties of the composite materials should not deteriorate by using coupling agents. WO 2017/207221 discloses a laminated structure which provides oxygen barrier properties and which can be recycled. In the tie layers of the multilayer structure commercially available adhesion polymers were used, including graft copolymers of ethylene with polar comonomers such as organic acids and organic acid derivatives.

However, more recently, the importance of composite materials being not only recyclable, but having also improved properties, is growing. It is desired that coupling agents be employed to improve the quality and performance of recyclates. Commercially available adhesives include Dow's RETAIN Polymer Modifiers. These are reactive, ultra low viscosity olefin polymers which have been designed, *inter alia,* with good haze in mind. However, to date, coupling agents which improve the stiffness-toughness balance of the overall material have yet to be designed. Further, it would be desirable to find a coupling agent having a broad application window, i.e. an agent which is suitable for use with a wide range of different types of constituents in the composite material.

The present inventors have surprisingly found that the coupling agents of the present invention, which comprise a multimodal LLDPE, which has been grafted with an acidic grafting agent, possess the necessary balance of properties. The multimodal LLDPE to be grafted may be high in viscosity, has multimodal branching distribution and has relatively high stiffness. These properties do not essentially change during the grafting process. Commercially available PE based MAH grafted compounds are typically very low viscosity. The material of the invention also offers the advantage that it is a single LLDPE which has been grafted, i.e. the polymer to be grafted need not be blended with other polymers prior to grafting. One example of a single multimodal LLDPE used according to the invention is a reactor made polymer, i.e. one which is directly obtained from the polymerisation reactor without any further blending with other polymers before grafting. However, antioxidants, as arewell known in the art, may be added to the polymer. Often, commercially available coupling agents comprise several components in which a mixture of polymers have been grafted. Using a single LLDPE, such as a reactor made LLDPE, helps obtain a homogeneous grafted polymer with consistent quality, which in turn leads to a more homogenous composite material. Extra blending steps with other polymers can result easily in inhomogeneity of the grafted material. Naturally, such blending also leads to extra working steps, and to avoid these is desired from both a simplicity and cost perspective.

It is thus an object of the present invention to provide an improved coupling agent which provides both homogeneous chemical bonding but also enhances the mechanical properties of composite materials, and does not hinder their capacity to be recycled. A coupling agent which can be used with a wide range of different constituents in the composite material is looked-for. Thus, the new coupling agent should ideally enable recyclable or even recycled constituents to be employed in the composite material. In particular, a coupling agent which is straight forward to produce is desired. Preferably, improvement is observed in more than one of these factors.

### Summary

Thus, in a first aspect, the invention provides a multimodal linear low density polyethylene (LLDPE) which has been grafted with an acidic grafting agent to form a grafted LLDPE (g-LLDPE), wherein said LLDPE is a copolymer of ethylene and at least one α-olefin comonomer, wherein the density of said LLDPE is in the range 915 to 950 kg/m³, preferably 918 to 940 kg/m³, wherein said LLDPE is prepared using a Ziegler-Natta catalyst and wherein said LLDPE has an MFR₂ of 0.05 to 50 g/10 min, preferably 0.05 to 10 g/lOmin.

In a second aspect, the invention provides the use of a g-LLDPE as defined herein as a coupling agent, preferably wherein said g-LLDPE is the sole polymer component in the coupling agent.

Typically, the coupling agent is employed in a composite material.

In a third aspect, the invention provides a coupling agent comprising a multimodal linear low density polyethylene (LLDPE) which has been grafted with an acidic grafting agent to form a grafted LLDPE (g-LLDPE), wherein said LLDPE is a copolymer of ethylene and at least one α-olefin comonomer, wherein the density of said LLDPE is in the range 915 to 950 kg/m³, preferably 918 to 940 kg/m³, wherein said LLDPE is prepared using a Ziegler-Natta catalyst and wherein said LLDPE has an MFR₂ of 0.05 to 50 g/10 min, wherein said LLDPE is the sole polymer component in the coupling agent.

In a fourth aspect, the invention provides a composite material comprising a coupling agent, wherein said coupling agent comprises, preferably consists of, the g-LLDPE as defined herein.

In a fifth aspect, the invention provides a process for producing a grafted LLDPE comprising:
a. producing an LLDPE as defined in herein in a process comprising the steps of:
   (i) homopolymerising ethylene or copolymerising ethylene and at least one α-olefin comonomer in a first polymerisation stage in the presence of a Ziegler-Natta catalyst to produce a first ethylene homo- or copolymer;
   (ii) copolymerising ethylene and at least one α-olefin comonomer in a second polymerisation stage in the presence of the first ethylene homo- or copolymer and the same Ziegler-Natta catalyst as step (i), to produce said LLDPE comprising the first ethylene homo- or copolymer and a second ethylene copolymer,

   wherein the comonomer content of the second ethylene copolymer is the same or higher, preferably higher, than the comonomer content of the first ethylene homo- or copolymer, and
   wherein the first polymerisation stage may be carried out in one or two polymerisation steps, preferably in one step in a loop reactor, and the second polymerisation stage is carried out in a gas phase reactor; and
b. grafting the LLDPE obtained from the polymerisation reactor with an acidic grafting agent, preferably maleic anhydride.

### Definitions

The term molecular weight is used herein to refer to weight average molecular weight (Mw) unless otherwise specified.

All MFR values are determined in accordance with ISO 1133, at 190 °C, at a load of 2.16 kg, 5.0 kg or 21.6 kg and marked as MFR₂, MFR₅ and MFR_{21.6} respectively.

The term "reactor made polymer" used herein refers to a polymer obtained directly from a polymerisation reactor. It will be understood to have the desired multimodality without any additional blending with other polymers. Accordingly, the term "reactor made multimodal LLDPE" is used herein to refer to an LLDPE obtained directly from a multistage polymerisation reactor configuration and having the desired multimodality. Thus, the multimodality in such a polymer is achieved by the multistage polymerisation configuration.

Multimodal LLDPE is used herein to refer to LLDPE being multimodal in respect to molecular weight and/or comonomer distribution as described in detail below.

By "grafted LLDPE" we mean an LLDPE which has been grafted using an acidic grafting agent. The skilled person will understand that during the grafting process the acidic grafting agent becomes chemically bound (usually via at least one covalent bond) to the LLDPE. Thus, the "grafted LLDPE" comprises (e.g. consists of) the LLDPE and the acidic grafting agent chemically bound to each other.

### Detailed Description

This invention relates to a multimodal linear low density polyethylene (LLDPE) which has been grafted with an acidic grafting agent to form a grafted LLDPE (g-LLDPE), wherein said LLDPE is a copolymer of ethylene and at least one α-olefin comonomer, wherein the density of said LLDPE is in the range 915 to 950 kg/m³, preferably 918 to 940 kg/m³, wherein said LLDPE is prepared using a Ziegler-Natta catalyst and wherein said LLDPE has an MFR₂ of 0.05 to 50 g/10 min.

The grafted LLDPE will be referred to herein as the "g-LLDPE". The LLDPE prior to grafting is referred to herein as "LLDPE".

Said g-LLDPE may also be termed the "coupling agent" according to the present invention. Accordingly, the present invention relates to a coupling agent being a multimodal linear low density polyethylene (LLDPE), which is a copolymer of ethylene and at least one α-olefin comonomer, wherein the density of said LLDPE is in the range 915 to 950 kg/m³, preferably 918 to 940 kg/m³, wherein said LLDPE is prepared using a Ziegler-Natta catalyst and wherein said LLDPE has an MFR₂ of 0.05 to 50 g/10 min and which has been grafted with an acidic grafting agent.

In a particular aspect, the invention relates to a coupling agent comprising a multimodal linear low density polyethylene (LLDPE) which has been grafted with an acidic grafting agent to form a grafted LLDPE (g-LLDPE), wherein said LLDPE is a copolymer of ethylene and at least one α-olefin comonomer, wherein the density of said LLDPE is in the range 915 to 950 kg/m³, preferably 918 to 940 kg/m³, wherein said LLDPE is prepared using a Ziegler-Natta catalyst and wherein said LLDPE has an MFR₂ of 0.05 to 50 g/10 min, wherein said LLDPE is the sole polymer component in the coupling agent.

A multimodal linear low density polyethylene (LLDPE) which has been grafted with an acidic grafting agent to form a grafted LLDPE (g-LLDPE) may thereby especially be for example for compatibilizing (for use as compatibilizer in) composite materials comprising at least one non-polar polymer and at least one material which is incompatible with the non-polar polymer, especially for example polymer recyclates and/or polymer recyclate from multilayer films comprising at least one material which is incompatible with the non-polar polymer and/or comprising an inorganic component which is incompatible with the non-polar polymer.

The LLDPE may be produced in a multistage polymerisation process using a Ziegler-Natta catalyst.

### LLDPE

The LLDPE of the invention is "multimodal". Thus, by definition, it comprises at least two fractions. An LLDPE comprising at least two polyethylene fractions having different (weight average) molecular weights and preferably also different comomoner contents (often as a result of being produced under different polymerisation conditions), is referred to as "multimodal". The form of the molecular weight distribution curve, i.e. the appearance of the graph of the polymer weight fraction as a function of its molecular weight, of a multimodal polymer, e.g. LLDPE, will show two or more maxima or is typically distinctly broadened in comparison with the curves for the individual fractions. For example, if a polymer is produced in a sequential multistage process, utilizing reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions form typically together a broadened molecular weight distribution curve for the total resulting polymer product.

The prefix "multi" relates to the number of different polymer fractions present in the polymer. Thus, for example, multimodal polymer includes so called "bimodal" polymer consisting of two fractions. Preferably, the LLDPE is bimodal, i.e. consisting of two fractions.

The multimodal LLDPE polymer of the invention has a density (ISO 1183) in the range of 915 to 950 kg/m³, preferably in the range of from 918 to 940 kg/m³, more preferably in the range of 920 to 935 kg/m³, even more preferably 921 to 930 kg/m³, especially 922 to 926 kg/m³.

The MFR₂ of the multimodal LLDPE is in the range of 0.05 to 50 g/lOmin, preferably 0.05 to 20 g/lOmin, more preferably 0.05 to 10 g/lOmin, such as 0.1 to 5 g/lOmin or even more preferably 0.05 to < 1 g/lOmin, further preferred 0.06 to 0.9 g/lOmin, further preferred 0.07 to 0.8 g/lOmin, further preferred 0.08 to 0.6 g/lOmin. Generally, MFR₂ is less than 5, especially less than 3 g/lOmin, thus, being preferably in the range of 0.05 to 3 g/lOmin or 0.1 to 2.5 g/lOmin, or in some embodiments in the range of 0.2 to 2 g/lOmin (ISO 1133, 190 °C/min, 2.16 kg load).

The MFR₅ of the multimodal LLDPE is preferably in the range of 0.1 to 20 g/lOmin, preferably 0.1 to 10 g/lOmin, e.g. 0.2 to 8 g/lOmin, especially 0.2 to 6 g/lOmin (ISO 1133, 190 °C/min, 5.0 kg load).

The MFR₂₁ of the multimodal LLDPE is preferably in the range of 5 to 150, preferably 10 to 100 g/lOmin, e.g. 15 to 70 g/10 min (ISO 1133, 190 °C/min, 21.6 kg load).

The multimodal LLDPE used in the invention is preferably a bimodal LLDPE. The FRR (i.e. the ratio MFR₂₁/MFR₅) of the bimodal LLDPE is preferably in the range of 10 to 100, preferably 12 to 70, e.g. 15 to 30.

Typically, where a reactor made multimodal polymer having the FRR as defined above is used to produce a monolayer film, that film will be very hazy. Haze is measured according to ASTM D 1003 from a 40 micron blown film produced on a W&H extruder with L/D 30 and die 200 x1,2 mm, BUR=3:1 and FLH=2DD is preferably above 30%, more preferably above 50%, even up to 70 %, where BUR is blow-up ratio, FLH is frost line height and DD is Draw down.

The multimodal LLDPE used in the present invention ideally possesses a low xylene soluble fraction (XS). Thus, the XS may be less than 25 wt%, preferably less than 20 wt%.

Furthermore the LLDPE preferably has a zero shear melt viscosity η₀ (measured according to ISO 6721-1 and -10 at frequencies 0.05 rad/s and at 190°C) of from 10000 Pa.s to 70000 Pa.s, preferably from 15000 Pa.s to 60000 Pa.s.

The melting points (measured with DSC according to ISO 11357-1) of suitable multimodal LLDPEs are typically below 130 °C, preferably in the range of 120 to 130 °C , more preferably in the range of below 120 to 128 °C .

The multimodal LLDPE according to the present invention is a copolymer of ethylene and at least one α-olefin comonomer. Preferably the at least one α-olefin comonomer has 4 to 8 C-atoms, more preferably 4 to 6 C-atoms. Most preferred comonomers are selected from 1-butene and 1-hexene or mixtures thereof.

Typically, the LLDPE comprises:
i) a low molecular weight (LMW) fraction being an ethylene homopolymer or a copolymer of ethylene and at least one α-olefin comonomer (e.g. a C₄-C₈ α-olefin comonomer) and
ii) a high molecular weight (HMW) fraction being a copolymer of ethylene and at least one α-olefin comonomer (e.g. a C₄-C₈ α-olefin comonomer), wherein the comonomer content of the high molecular weight fraction ii) is the same or higher than in the low molecular weight fraction i).

The expression "ethylene homopolymer" as used herein refers to a polyethylene that consists substantially, i.e. to at least 97 % by weight, preferably at least 99 % by weight, more preferably at least 99.5 % by weight and most preferably at least 99.8 % by weight of ethylene.

As indicated above the multimodal LLDPE is composed at least of two fractions. Preferably, the LLDPE consists of the low molecular weight (LMW) fraction and a high molecular weight (HMW) fraction as defined above. In one preferred embodiment of the invention the LLDPE consists of these two fractions, wherein both fractions are ethylene copolymers with the comonomers as indicated above.

The HMW fraction can contain at least one comonomer which is the same as one employed in the LMW fraction. It is possible for both fractions to be copolymers of ethylene and the same comomoner, e.g ethylene and 1-butene or ethylene and 1-hexene. It should be understood, however, that if both fractions contain the same comonomer, the two fractions are not identical and will differ in their (weight average) molecular weights and preferably also comomoner contents.

It is also possible for the LMW and HMW components to contain different comonomers. In embodiments wherein the comonomer in the LMW fraction is different to the comonomer in the HMW fraction, preferred comonomer combinations include (LMW/HMW) 1-butene/1-hexene and 1-hexene/1-butene.

It thus follows that the multimodal LLDPE of the invention can be a copolymer of ethylene and only one type of α-olefin comonomer or a copolymer of ethylene and two different α-olefin comonomers (i.e. a terpolymer). In such cases, it is also possible that one or both of the LMW and HMW fractions can contain two or more different copolymers, such as 1-butene and 1-hexene.A further possibility is the combination of polyethylene homopolymer LMW fraction and a HMW fraction containing ethylene and two comonomers, preferably 1-butene and 1-hexene. Thus the HMW fraction is a terpolymer.

In a particularly preferred embodiment the LLDPE is a bimodal LLDPE comprising a LMW and a HMW fraction, which are both ethylene/1-butene copolymers with different molecular weight and wherein the comonomer content in the higher molecular weight fraction is higher than in the lower molecular weight fraction.

The amount of comonomer present in the multimodal LLDPE as a whole is preferably 1 to 30 wt%, more preferably 1 to 20 wt%, even more preferably from 2 to 15 wt%, such as 3 to 10 wt% relative to the total weight of the LLDPE as a whole.

### LMW fraction:

The low molecular weight fraction of the multimodal LLDPE preferably has a MFR₂ of at least 10 g/10 min, preferably of at least 100 g/lOmin and more preferably 110 to 3000 g/lOmin, e.g. 110 to 500 g/lOmin, especially 200 to 400 g/10min.

The density of the low molecular weight fraction may range from 920 to 980 kg/m³, preferably from 940 to 970 kg/m³ and more preferably from 945 to 965 kg/m³,

The amount of LMW fraction typically forms 25 to 55 wt%, preferably 35 to 52 wt% and more preferably 40 to 50 wt%, such as 41 to 48 wt%, relative to the total weight of the LLDPE as a whole.

The lower molecular weight component can be an ethylene homopolymer (i.e. where ethylene is the only monomer present) but is preferably an ethylene copolymer of ethylene and at least one α-olefin comonomer, especially where only one comonomer is present. Especially the copolymer of the LMW fraction is a copolymer of ethylene and 1-butene.

The comonomer content in the LMW component is typically kept at most on the same level, preferably lower than that of the HMW component. Comonomer contents of less than 10 wt% are appropriate, preferably less than 7 wt% in the LMW fraction.

### HMW Fraction

The high molecular weight fraction should have a lower MFR₂ (i.e. a higher molecular weight (MW) and a lower density than the lower molecular weight fraction.

The high molecular weight fraction should have an MFR₂ which is preferably less than 1 g/10 min, more preferably less than 0.5 g/10 min, especially less than 0.2 g/lOmin.

The MFR₂₁ of the HMW fraction should be preferably less than 20, more preferably less than 10 g/lOmin, such as less than 8 g/10 min.

The HMW fraction should have a density of less than 915 kg/m³, e.g. less than 913 kg/m³, preferably less than 912 kg/m³, especially less than 910 kg/m³.It is also preferred that the density of the HMW fraction is greater than 890 kg/m³. Ideally, the density should be in the range 895 to 912 kg/m³. It should be noted that where the HMW fraction is made as a second step in a multistage polymerization it is not possible to measure its properties directly. However, the density, MFR₂ etc. of the HMW fraction can be calculated from the properties of the final polymer, as described in detail in process description part.

The high molecular weight fraction typically forms 45 to 75 wt%, preferably 48 to 65 wt% and more preferably 50 to 60 wt%, such as 52 to 59 wt%, relative to the total weight of the LLDPE as a whole.

The high molecular weight fraction is an ethylene copolymer, in particular a binary copolymer (i.e. where only one comonomer is present) or a terpolymer (with two comonomers). The comonomer(s) in the HMW fraction is an α-olefin, preferably 1-butene.

The amount of comonomer present in the HMW is at least the same as the amount of comonomer present in the LMW fraction. Preferably, the comonomer content of the HMW fraction is higher than in LMW fraction, in order to get the desired bimodal comonomer content distribution. Comonomer contents of less than 15 wt% are appropriate, such as less than 12 wt%, in the HMW fraction.

It should be noted that comonomer amounts in HMW component cannot be measured directly in a process where the HMW component is formed second in a multistage process, but may be calculated based on the amount of the LMW component present and of the final polymer as well as knowledge of the production split. Production split means the fraction of polymer produced in each step of the multistage polymerisation.

### Further Components of the multimodal LLDPE

The multimodal LLDPE of the invention may consist of the LMW and HMW fractions as defined herein. Alternatively, the multimodal LLDPE may comprise other polymer components in addition to the LMW and HMW fractions. For example, the polymer may contain up to 10 wt% of a polyethylene prepolymer (obtainable from a pre-polymerization step as well known in the art). In case of such prepolymer, the prepolymer component may be comprised in one of the LMW and HMW fractions, preferably the LMW fraction, as defined above. As is common knowledge, the amounts of all polymer components sum up to 100% for the LLDPE.

It will be appreciated that the LLDPE may also contain standard polymer additives, which may be added e.g. during the pelletizing step. Such additives are well known to the skilled worker.

### Polymerisation

The multimodal LLDPE polymers according to the present invention may be prepared by in-situ blending in a multistage polymerization process comprising at least two polymerisation stages. Such polymers are referred to in the present application as "reactor made" polymers. The term "reactor made polymer" used herein refers to a polymer obtained directly from a polymerisation reactor. It will be understood to have the desired multimodality without any additional blending with other polymers. Accordingly, the term "reactor made multimodal LLDPE" is used herein to refer to an LLDPE obtained directly from a multistage polymerisation reactor configuration and having the desired multimodality.

In all embodiments of the invention it is preferred if the multimodal LLDPE is a single polymer which has been prepared by *in-situ* blending in a multistage polymerisation process. The multimodality in such a polymer is achieved by the multistage polymerisation configuration. It will be appreciated that such polymers are distinct from a polymer blend wherein two or more components, which have been prepared in separate polymerisation process, are mixed.

The process by which the LLDPE of the invention is prepared may thus comprise two or more polymerisation stages or zones, wherein the terms "stages" and "zones" have the same meaning in the present application. Typically, the low molecular weight ethylene polymer component is produced in a first polymerization zone and the high molecular weight ethylene copolymer component is produced in a second polymerization zone. The first polymerization zone and the second polymerization zone may be connected in any order, i.e. the first polymerization zone may precede the second polymerization zone, or the second polymerization zone may precede the first polymerization zone or, alternatively, polymerization zones may be connected in parallel. However, it is preferred to operate the polymerization zones in cascaded mode. The polymerization zones may operate in slurry, solution, or gas phase conditions or a combination thereof. Suitable processes comprising cascaded slurry and gas phase polymerization stages are disclosed, for example, in WO-A-92/12182 and WO-A-96/18662.

It is often preferred to remove the reactants of the preceding polymerization stage from the polymer before introducing it into the subsequent polymerization stage. This is preferably done when transferring the polymer from one polymerization stage to another. Suitable methods are disclosed, for example, in EP-A-1415999 and WO-A-00/26258.

The LLDPE of the invention is produced in the presence of suitable Ziegler-Natta catalysts, known to the art skilled persons.

The actual polymerization steps may be preceded by a prepolymerization step. The purpose of the prepolymerization is to polymerize a small amount of polymer onto the catalyst at a low temperature and/or a low monomer concentration. By prepolymerization it is possible to improve the performance of the catalyst in the actual polymerisation and/or modify the properties of the final polymer. The prepolymerization step may be conducted in slurry or in gas phase. Preferably the prepolymerization is conducted in slurry.

A preferred multistage process for producing the LLDPE used according to the invention comprises at least one loop reactor and at least one gas-phase reactor such as developed by Borealis A/S, Denmark (known as BORSTAR^{®} technology) and described in patent literature, such as in EP 0 887 379 , WO 92/12182 WO 2004/000899 , WO 2004/111095 or in WO 00/68315. It is also possible to use more than two polymerisation stages, such as more than one slurry reactors and/or more than one gas phase reactors. One preferred multistage polymerisation configuration comprises two slurry (loop) reactors and one gas phase reactor.

In one example of the process, in a first step ethylene is polymerized in a loop reactor in the liquid phase of an inert low-boiling hydrocarbon medium. Then, the reaction mixture after polymerisation is discharged from the loop reactor and at least a substantial part of the inert hydrocarbon is separated from the polymer. The polymer is then transferred in a second or further step to one or more gas-phase reactors where the polymerization is continued in the presence of gaseous ethylene.

At least one fraction of the LLDPE of the invention is an ethylene copolymer where ethylene is polymerized with at least one α-olefin comonomer as defined above. Further, it is preferred that if the polyethylene is produced according to the above-described multi-stage process the LMW fraction is produced in a loop reactor and the HMW fraction in a gas-phase reactor. Using a multistage process the high and low molecular weight fractions are intimately mixed during the polymerisation process.

Thus, in a further embodiment, the invention relates to a process for producing a grafted LLDPE comprising:
b. producing an LLDPE as defined in herein in a process comprising the steps of:
   (i) homopolymerising ethylene or copolymerising ethylene and at least one α-olefin comonomer in a first polymerisation stage in the presence of a Ziegler-Natta catalyst to produce a first ethylene homo- or copolymer;
   (ii) copolymerising ethylene and at least one α-olefin comonomer in a second polymerisation stage in the presence of the first ethylene homo- or copolymer and the same Ziegler-Natta catalyst as step (i), to produce said LLDPE comprising the first ethylene homo- or copolymer and a second ethylene copolymer,

   wherein the comonomer content of the second ethylene copolymer is the same or higher, preferably higher than the comonomer content of the first ethylene homo- or copolymer, and
   wherein the first polymerisation stage may be carried out in one or two polymerisation steps, preferably in one step in a loop reactor, and the second polymerisation stage is carried out in a gas phase reactor; and
c. grafting the LLDPE obtained from the polymerisation reactor with a acidic grafting agent, preferably maleic anhydride.

In such a process, the first ethylene homo- or copolymer preferably has a density of from 920 to 980 kg/m³ and/or a melt flow rate MFR₂ of at least 10 g/10 min.

The properties of the multimodal polyethylene can be adjusted by changing the ratio of the low molecular fraction to the high molecular fraction in the multimodal polyethylene (production split). Preferably, the LLDPE comprises 35-55 % by weight, preferably 41-48 % by weight of a LMW component, and 45-65 % by weight, preferably 52-59% by weight of a HMW component.

A further possibility for the preparation of the multimodal LLDPE of the invention is the polymerization of the two fractions using two different Ziegler Natta polymerization catalysts in a one stage polymerization process. However, preferably the LLDPE of the present invention is produced in a multistage process using the same Ziegler-Natta catalyst in all polymerisation stages. Typically, the catalyst is fed to the first reactor, which may be also a prepolymerisation reactor.

Preferably the multimodal LLDPE of the invention is prepared by a process which employs slurry polymerization in a loop reactor followed by gas phase polymerization in a gas phase reactor.

The conditions used in such a process are well known. For slurry reactors, the reaction temperature will generally be in the range 60 to 110°C (e.g. 85-110°C), the reactor pressure will generally be in the range 5 to 80 bar (e.g. 50-65 bar), and the residence time will generally be in the range 0.3 to 5 hours (e.g. 0.5 to 2 hours). The diluent used will generally be an aliphatic hydrocarbon having a boiling point in the range -70 to +100°C. In such reactors, polymerization may if desired be effected under supercritical conditions. Slurry polymerization may also be carried out in bulk where the reaction medium is formed from the monomer being polymerized, however, for ethylene polymerisations the diluent is preferably an inert aliphatic hydrocarbon.

For gas phase reactors, the reaction temperature used will generally be in the range 60 to 115°C (e.g. 70 to 110°C), the reactor pressure will generally be in the range 10 to 25 bar, and the residence time will generally be 1 to 8 hours. The gas used will commonly be a non-reactive gas such as nitrogen or low boiling point hydrocarbons such as propane together with monomer (e.g. ethylene).

Preferably, the low molecular weight fraction is produced in a continuously operating loop reactor where ethylene is polymerized optionally in the presence of comonomer(s), a Ziegler Natta polymerization catalyst with conventional cocatalysts, i.e. compounds of Group 13 metal, like Al alkyl compounds, and a chain transfer agent such as hydrogen. The diluent is typically an inert aliphatic hydrocarbon, preferably isobutane or propane. The high molecular weight fraction can then be formed in a gas phase reactor using the same catalyst.

Where the HMW fraction is made as a second step in a multistage polymerization it is not possible to measure its properties directly. However, for the above described polymerization process of the present invention, the density, MFR₂ etc. of the HMW fraction can be calculated using Kim McAuley's equations. Thus, both density and MFR₂ can be found using K. K. McAuley and J. F. McGregor: On-line Inference of Polymer Properties in an Industrial Polyethylene Reactor, AIChE Journal, June 1991, Vol. 37, No, 6, pages 825-835. The density is calculated from McAuley's equation 37, where final density and density after the first reactor is known. MFR₂ is calculated from McAuley's equation 25, where final MFR₂ and MFR₂ after the first reactor is known.

If the multimodal LLDPE used is recycled material, then this material originates from recovered both post-consumer waste and post-industrial waste, which is re-granulated.

### Catalyst

Ziegler-Natta (ZN) type polyolefin catalysts are well known in the field of producing olefin polymers, such as ethylene (co)polymers. Generally the catalysts comprise at least a catalyst component formed from a transition metal compound of Group 4 to 6 of the Periodic Table (IUPAC, Nomenclature of Inorganic Chemistry, 1989), a metal compound of Group 1 to 3 of the Periodic Table (IUPAC), optionally a compound of group 13 of the Periodic Table (IUPAC), and optionally an internal organic compound, like an internal electron donor. A ZN catalyst may also comprise further catalyst component(s), such as a cocatalyst and optionally external additives.

Suitable Ziegler - Natta catalysts preferably contain a magnesium compound, an aluminium compound and a titanium compound supported on a particulate support.

The particulate support can be an inorganic oxide support, such as silica, alumina, titania, silica-alumina, silica-titania or a MgCl₂ based support. Preferably, the support is silica or a MgCl₂ based support.

The average particle size of the silica support is typically from 5 to 100 µm. However, it has turned out that special advantages can be obtained if the support has an average particle size from 10 to 30 µm, preferably from 15 to 25 µm, or from 18 to 25 µm.Alternatively, the support may have an average particle size of from 30 a 80 µm, preferably from 30 to 50 µm.

The magnesium compound may be a reaction product of a magnesium dialkyl and an alcohol. The alcohol is a linear or branched aliphatic monoalcohol. Preferably, the alcohol has from 6 to 16 carbon atoms. Branched alcohols are especially preferred, and 2-ethyl-1-hexanol is one example of the preferred alcohols. The magnesium dialkyl may be any compound of magnesium bonding to two alkyl groups, which may be the same or different. Butyl-octyl magnesium is one example of the preferred magnesium dialkyls.

The aluminium compound can be a chlorine containing aluminium alkyl. Especially preferred compounds are aluminium alkyl dichlorides and aluminium alkyl sesquichlorides.

The transition metal compound of Group 4 to 6 is preferably a titanium or vanadium compound, more preferably a halogen containing titanium compound, most preferably chlorine containing titanium compound. An especially preferred titanium compound is titanium tetrachloride.

The catalyst can be prepared by sequentially contacting the carrier with the above mentioned compounds, as described in EP 688794 or WO 99/51646. Alternatively, it can be prepared by first preparing a solution from the components and then contacting the solution with a carrier, as described in WO 01/55230.

Another group of suitable Ziegler - Natta catalysts contain a titanium compound together with a magnesium halide compound acting as a support. Thus, the catalyst contains a titanium compound and optionally a Group 13 compound, for example an aluminium compound on a magnesium dihalide, like magnesium dichloride. Such catalysts are disclosed, for instance, in WO 2005/118655, EP 810235, WO2014/096296 and WO2016/097193.

According to the present invention, the multimodal LLDPE is preferably produced using a silica supported Ziegler-Natta catalyst, as described EP 688794, EP 835887 or WO 99/51646.

Typical internal organic compounds, like internal electron donors, if used, are chosen from the ethers, esters, amines, ketones, alcohols, anhydrides or nitriles or mixtures thereof, preferably from ethers and esters, most preferably from ethers of 2 to 20 carbon-atoms and especially mono, di or multicyclic saturated or unsaturated ethers comprising 3 to 6 ring atoms.

The Ziegler - Natta catalyst is typically used together with a cocatalyst. Suitable cocatalysts are Group 13 metal compounds, typically Group 13 alkyl compounds and especially aluminium alkyl compounds, where the alkyl group contains 1 to 16 C-atoms. These compounds include trialkyl aluminium compounds, such as trimethylaluminium, triethylaluminium, tri-isobutylaluminium, trihexylaluminium and tri-n-octylaluminium, alkyl aluminium halides, such as ethylaluminium dichloride, diethylaluminium chloride, ethylaluminium sesquichloride, dimethylaluminium chloride and the like. Especially preferred cocatalysts are trialkylaluminiums, of which triethylaluminium, trimethylaluminium and tri-isobutylaluminium are particularly used.

The amount of cocatalyst used depends on the specific catalyst and cocatalyst. Typically triethylaluminium is used in such amount that the molar ratio of aluminium to the transition metal, like Al/Ti, is from 1 to 1000, preferably from 3 to 100 and in particular from about 5 to about 30 mol/mol.

### Grafting

The multimodal LLDPE of the invention has been grafted by an acidic grafting agent to produce a grafted-LLDPE (g-LLDPE). It is this grafted LLDPE which may be employed as a coupling agent. As acidic grafting agent, any such agent can be used which is known to be suitable for this purpose by the person skilled in the art. Preferably, the acidic grafting agent is an unsaturated carboxylic acid or a derivative thereof such as anhydrides, esters and salts (both metallic or non-metallic). Preferably, the unsaturated group is in conjugation with the carboxylic group. Examples of such grafting agents include acrylic acid, methacrylic acid, fumaric acid, maleic acid, nadic acid, citraconic acid, itaconic acid, crotonic acid, and their anhydrides, metal salts, esters amides or imides. The preferred grafting agents are maleic acid, its derivatives such as maleic anhydride, most preferably maleic anhydride.

Grafting can be carried out by any process known in the art such as grafting in a melt without a solvent or in solution or dispersion or in a fluidised bed. Preferably, grafting is performed in a heated extruder or mixer as e. g. described in US 3236917, US 4639495, US 4950541 or US 5194509. Preferably, grafting is carried out in a twin screw extruder such as described in US 4950541.

Grafting may be carried out in the presence or absence of a radical initiator but is preferably carried out in the presence of a radical initiator such as an organic peroxide, organic perester or organic hydroperoxide.

The amount of said acidic grafting agent added to the LLDPE before grafting is preferably from 0.01 to 3.0 parts by weight, more preferably from 0.03 to 1.5 parts by weight relative to the total weight of the LLDPE and grafting agent combined.

### Composite Material

According to the invention the g-LLDPE of the invention may be employed as a coupling agent in a composite material. Thus, the present invention also relates to a composite material comprising the g-LLDPE of the invention as herein defined as a coupling agent. Preferably, the coupling agent consists of the g-LLDPE of the invention. As used herein, the term "composite material" is intended to cover any material comprising two or more constituent materials which have quite different physical or chemical properties, which are preferably finely divided and mixed which each other. For the avoidance of doubt, "composite material" in the sense of the invention may preferably for example not encompass mere multilayer arrangement of different materials. It will be appreciated that these two or more constituent materials are in addition to the g-LLDPE of the invention.

Typically, the composite material of the invention will comprise at least one non-polar polymer. Usually, the non-polar polymer is a polyolefin of linear or cyclic monomers of 2 to 20 carbon atoms, preferably 2 to 12 carbon atoms, especially polyethylene or polypropylene or copolymers thereof with ethylene or α-olefins of 3 to 8 carbon atoms. One example composite material is one wherein the non-polar polymer is a polyethylene, such as an LLDPE. Any suitable LLDPE may be employed. The LLDPE may be the same or different as is used for preparing the g-LLDPE (coupling agent) of the invention. The non-polar polymers may form the majority of the composite material by weight and may then be referred to as the base or matrix material. However, the amount of non-polar polymers may also form the minority of the composite material by weight.

The other component(s) of the composite material are often materials which are incompatible with the non-polar polymer. Such materials may be polymer(s), typically polar polymers, or they may be another type of material, such as inorganic, synthetic or organic fillers, pigments, other additives or mixtures thereof. Example polar polymers include ethylene vinyl alcohol (EVOH) and polyamide (PA). The fillers include spherical or plate-like fillers or fillers in fiber form. Examples of fillers may include among others stone-dust, talk, glass-fibers, carbon carbonate, wollastonite, wool or cellulosic fibres or cotton fabrics. Carbon black and TiO₂ are typical examples of pigments.

As indicated above the type and amounts of the constituents of the composite material may vary a lot depending on the needs of the end applications. However, the fraction of constituents being incompatible with the non-polar polymer and comprising polar polymers, fillers, pigments and/or any other constituents or mixtures thereof may constitute 0.1 to 80 wt% of the composite material. The non-polar polymer and coupling agent may thus constitute together 20 to 99.9 wt% of the composite material.

The amount of coupling agent is highly dependent on the amounts of the non-polar polymer and of the constituents being incompatible with the non-polar polymers. In addition, the nature of the incompatible constituent(s) influences the amount of the coupling agent. Typical ranges for the amount of coupling agent present in the composite material are 1 to 20 wt%, such as 3 to 15 wt%, relative to the total weight of the composite material as a whole.

Descriptive, non- restrictive examples of composite materials, where the coupling agent of the invention is used, may comprise 0.1 wt% to 30 wt% of EVOH and/or 0.2 to 35 wt% of PA and/or 1 to 70 wt% of a filler as the incompatible constituents), 1 to 20 wt%, such as 3 to 15 wt%, of the coupling agent of the invention (g-LLDPE) and the rest being a non-polar polyolefin, wherein wt% is relative to the total weight of the composite material.

It will be appreciated that, in addition to the above-mentioned components, the composite materials of the invention may further comprise conventional additives present in small amounts, preferably up to at most 4 wt. %. For example, an antioxidant may be present in the composite material in an amount of at most 10,000 ppm, more preferably at most 5,000 ppm and most preferably at most 3,000 ppm.

Composite materials of the invention may be prepared by any known method in the art, however they are typically prepared by mixing the various components.

### Application

According to the invention the multimodal, preferably bimodal, LLDPE is used as a coupling agent in grafted form (g-LLDPE).

Ideally, the g-LLDPE is the sole polymer component in the coupling agent.

As discussed, it is particularly preferred if the LLDPE of the invention, which has been grafted (i.e. g-LLDPE as herein defined), is employed as a coupling agent in composite materials. Viewed from another aspect therefore the invention provides the use of a g-LLDPE as herein defined as a coupling agent in a composite material. The composite material may be any suitable material as defined herein.

Potential end uses for the composite materials, where the coupling agent of the present invention may be used, include a wide variety of articles such as pipes, waste water systems, conduits, decking (e.g. WPC (wood-plastic composites) for decking), containers, pallets, transport cases, sidings, ceilings, garden furniture, outbuildings, fences and poles.

### Examples

### Determination methods

### Charpy Impact Strength (NIS)

NIS was determined according to ISO 179-1eA:2000 on V-notched samples of 80×10×4 mm³ at 23 °C (Charpy notched impact strength (23°C)). The test specimens were prepared by compression moulding 350x160x4 mm plates at 180 °C using a cooling rate of 15°C/min. The 80x10x4 mm samples for Charpy testing were produced by water jet cutting from the plate.
MFR₂/MFR₅/MFR_{21.6} - ISO 1133, 190 °C, with 2.16 kg/5.0 kg/21.6 kg load, resp. given as g/lOmin
Density - ISO1183
Melt temperature - ISO 11357-3

### Chemicals

REF is pure LLDPE without any composite constituents and with density 923 kg/m³, MFR₂ (190 °C/2.16 kg) 0.2 g/10 min
D is stone dust and is side product from rockwool production
CCA - is commercial tie layer material Borcoat^{™} ME0420 of Borealis used as comparative coupling agent. Borcoat^{™} ME0420 has a density of 934 kg/m3 and an MFR₂ of 1.2 g/10 min.
ICA - is inventive coupling agent of the invention and is a reactor made bimodal LLDPE copolymer with 1-butene and with density 923 kg/m³, MFR₂ (190 °C/2.16 kg) 0.2 g/10 min, grafted with MAH (maleic anhydride)
PA (polyamide) - Ultramid^{®} B27E, density 1130 kg/m³ of BASF
MAH (maleic anhydride) - provided by ESIM Chemicals

### Preparation of Inventive coupling Agent (ICA)

The grafted LLDPE compositions were grafted in a KraussMaffei Berstorff's line ZE 120 mm co-rotating, twin-screw, extruder. LLDPE feed was ca. 2000 kg/h in all examples. The graft was achieved by adding MAH in amount of 0.5 %. The peroxide initiator (Perkadox 14S-fl, Akzo Nobel) was dissolved in isododecane as a 20% solution, of which 0.03% was added. The temperature in the extruder increased from 170 °C at the feeding to 200 °C at the die and the screw speed was set at 280 rpm. The same pelletised g-LLDPE was used in all inventive examples.

### Preparation of composite materials

Composite materials were prepared by compounding on a Werner Pfleidrer, ZSK30W co-rotating twin-screw extruder with L/D ratio 38 and screw diameter 30 mm. REF was used as base material in all examples and PA or stone dust added as composite constituents (CO) in amounts as indicated in Table 1.

Samples without a coupling agent (CA) and with a commercial tie layer resin as Comparative coupling agent (CCA) as well as with inventive coupling agent (ICA) were produced. Amounts of composite constituents (CO) and coupling agents (CA) (wt%) are based on the total weight of the composite material.

Materials were tested for Charpy impact strength (NIS), which indicates the homogeneity of the material. The higher the NIS, the more homogeneous is the material. The results are presented in Table 1.

One can see that Charpy impact and thus material compatibility is improved for the inventive examples.

**Table 1**

| | REF | CE1 | CE2 | IE1 | CE3 | CE4 | IE2 |
|---|---|---|---|---|---|---|---|
| CO | - | D | D | D | PA | PA | PA |
| Amount of CO/wt-% | | 20 | 20 | 20 | 15 | 15 | 15 |
| CA | - | - | CCA | ICA | - | CCA | ICA |
| Amount of CA/wt-% | - | - | 10 | 10 | - | 7.5 | 7.5 |
| Charpy Impact/kJ/m² | 67.8 | 48.1 | 45.4 | 57.3 | 26.5 | 76.9 | 78.7 |

## Claims

1. A multimodal linear low density polyethylene (LLDPE) which has been grafted with an acidic grafting agent to form a grafted LLDPE (g-LLDPE), wherein said LLDPE is a copolymer of ethylene and at least one α-olefin comonomer, wherein the density of said LLDPE is in the range 915 to 950 kg/m³, preferably 918 to 940 kg/m³, wherein said LLDPE is prepared using a Ziegler-Natta catalyst and wherein said LLDPE has an MFR₂ of 0.05 to 50 g/10 min, preferably 0.05 to 10 g/lOmin.

2. A LLDPE as claimed in claim 1, wherein the LLDPE has an MFR₂ of 0.05 to < 1 g/lOmin, preferably 0.06 to 0.9 g/lOmin, more preferably 0.07 to 0.8 g/lOmin, such as 0.08 to 0.6 g/lOmin

3. A LLDPE as claimed in any of claims 1 to 2, wherein the zero shear melt viscosity η₀ (measured according to ISO 6721-1 and -10 at frequencies 0.05 rad/s and at 190°C) of the LLDPE is from 10000 Pa.s to 70000 Pa.s, preferably from 15000 Pa.s to 60000 Pa.s.

4. A LLDPE as claimed in any of claims 1 to 3, wherein said LLDPE is produced in-situ in a multistage polymerisation process.

5. A LLDPE as claimed in any of claims 1 to 4, wherein said LLDPE is bimodal.

6. A LLDPE as claimed in any of claims 1 to 5, wherein the at least one α-olefin comonomer is a C₄-C₈-alpha olefin, preferably 1-butene or 1-hexene.

7. A LLDPE as claimed in any of claims 1 to 6, wherein said LLDPE comprises
i) a low molecular weight fraction being an ethylene homopolymer or a copolymer of ethylene and at least one α-olefin comonomer and
ii) a high molecular weight fraction being a copolymer of ethylene and at least one α-olefin comonomer, wherein the comonomer content of the high molecular weight fraction ii) is the same or higher than in the low molecular weight fraction i).

8. A LLDPE as claimed in any of claims 1 to 7, wherein said LLDPE is grafted with a maleic anhydride.

9. A LLDPE as claimed in any of claims 1 to 8, wherein said g-LLDPE is for compatibilizing composite materials comprising at least one non-polar polymer and at least one material which is incompatible with the non-polar polymer.

10. A coupling agent comprising a multimodal linear low density polyethylene (LLDPE) which has been grafted with an acidic grafting agent to form a grafted LLDPE (g-LLDPE), wherein said LLDPE is a copolymer of ethylene and at least one α-olefin comonomer, wherein the density of said LLDPE is in the range 915 to 950 kg/m³, preferably 918 to 940 kg/m³, wherein said LLDPE is prepared using a Ziegler-Natta catalyst and wherein said LLDPE has an MFR₂ of 0.05 to 50 g/10 min, wherein said LLDPE is the sole polymer component in the coupling agent.

11. Use of the g-LLDPE as defined in any of claims 1 to 9 as a coupling agent, preferably wherein said LLDPE is the sole polymer component in the coupling agent.

12. Use as claimed in claim 11, wherein said coupling agent is used in a composite material, preferably a composite material comprising a non-polar polymer and at least one constituent being incompatible therewith.

13. A composite material comprising a coupling agent, wherein said coupling agent comprises, preferably consists of, the g-LLDPE as defined in any of claims 1 to 9.

14. A composite material as claimed in claim 13, further comprising a non-polar polymer and at least one constituent being incompatible therewith.

15. A process for producing a grafted LLDPE comprising:
a. producing an LLDPE as defined in any of claims 1 to 9, in a process comprising the steps of:
(i) homopolymerising ethylene or copolymerising ethylene and at least one α-olefin comonomer in a first polymerisation stage in the presence of a Ziegler-Natta catalyst to produce a first ethylene homo- or copolymer;
(ii) copolymerising ethylene and at least one α-olefin comonomer in a second polymerisation stage in the presence of the first ethylene homo- or copolymer and the same Ziegler-Natta catalyst as step (i), to produce said LLDPE comprising the first ethylene homo- or copolymer and a second ethylene copolymer,
wherein the comonomer content of the second ethylene copolymer is the same or higher, preferably higher than the comonomer content of the first ethylene homo- or copolymer, and
wherein the first polymerisation stage may be carried out in one or two polymerisation steps, preferably in one step in a loop reactor, and the second polymerisation stage is carried out in a gas phase reactor; and
b. grafting the LLDPE obtained from the polymerisation reactor with an acidic grafting agent, preferably maleic anhydride.

16. A process as claimed in claim 15, wherein the first ethylene homo- or copolymer has a density of from 920 to 980/m³kg/m³ and/or a melt flow rate MFR₂ of at least 10 g/10 min.

## Patentansprüche

1. Multimodales lineares Polyethylen niederer Dichte (LLDPE), das mit einem sauren Propfmittel gepfropft worden ist, um ein gepfropftes LLDPE (g-LLDPE) zu bilden, wobei das LLDPE ein Copolymer von Ethylen und mindestens einem α-Olefin-Comonomer ist, wobei die Dichte des LLDPE im Bereich von 915 bis 950 kg/m³, vorzugsweise 918 bis 940 kg/m³ liegt, wobei das LLDPE unter Verwendung eines Ziegler-Natta-Katalysators hergestellt wird und wobei das LLDPE eine MFR₂ von 0,05 bis 50 g/10 min, vorzugsweise 0,05 bis 10 g/10 min aufweist.

2. LLDPE nach Anspruch 1, wobei das LLDPE eine MFR₂ von 0,05 bis < 1g/10 min, vorzugsweise 0,06 bis 0,9 g/10 min, mehr bevorzugt 0,07 bis 0,8 g/10 min, wie 0,08 bis 0,6 g/10 min aufweist.

3. LLDPE nach einem der Ansprüche 1 bis 2, wobei die Null-Scher-Schmelzviskosität η₀ (gemessen gemäß ISO 6721-1 und -10 bei Frequenzen 0,05 rad/s und bei 190 °C) des LLDPE von 10000 Pa.s bis 70000 Pa.s, vorzugsweise von 15000 Pa.s bis 60000 Pa.s beträgt.

4. LLDPE nach einem der Ansprüche 1 bis 3, wobei das LLDPE in einem mehrstufigen Polymerisationsprozess in-situ hergestellt wird.

5. LLDPE nach einem der Ansprüche 1 bis 4, wobei das LLDPE bimodal ist.

6. LLDPE nach einem der Ansprüche 1 bis 5, wobei das mindestens eine α-Olefin-Comonomer ein C₄-C₈-alpha-Olefin, vorzugsweise 1-Buten oder 1-Hexen ist.

7. LLDPE nach einem der Ansprüche 1 bis 6, wobei das LLDPE umfasst
i) eine Fraktion mit niedrigem Molekulargewicht, das ein Ethylenhomopolymer oder ein Copolymer von Ethylen und mindestens einem α-Olefin-Comonomer ist, und
ii) eine Fraktion mit hohem Molekulargewicht, das ein Copolymer von Ethylen und mindestens einem α-Olefin-Comonomer ist, wobei der Comonomergehalt der Fraktion mit hohem Molekulargewicht ii) der gleiche oder höher als in der Fraktion i) mit niedrigem Molekulargewicht ist.

8. LLDPE nach einem der Ansprüche 1 bis 7, wobei das LLDPE mit einem Maleinsäureanhydrid gepfropft ist.

9. LLDPE nach einem der Ansprüche 1 bis 8, wobei das g-LLDPE zum Kompatibilisieren von Verbundmaterialien ist, die mindestens ein nicht-polares Polymer und mindestens ein Material, das mit dem nicht-polaren Polymer inkompatibel ist, umfassen.

10. Kopplungsmittel, umfassend ein multimodales lineares Polyethylen niederer Dichte (LLDPE), das mit einem sauren Propfmittel gepfropft worden ist, um ein gepfropftes LLDPE (g-LLDPE) zu bilden, wobei das LLDPE ein Copolymer von Ethylen und mindestens einem α-Olefin-Comonomer ist, wobei die Dichte des LLDPE im Bereich von 915 bis 950 kg/m³, vorzugsweise 918 bis 940 kg/m³ liegt, wobei das LLDPE unter Verwendung eines Ziegler-Natta-Katalysators hergestellt wird und wobei das LLDPE eine MFR₂ von 0,05 bis 50g/10min aufweist, wobei das LLDPE die einzige Polymerkomponente in dem Kopplungsmittel ist.

11. Verwendung des g-LLDPE nach einem von Ansprüchen 1 bis 9 als ein Kopplungsmittel, vorzugsweise wobei das LLDPE die einzige Polymerkomponente in dem Kopplungsmittel ist.

12. Verwendung nach Anspruch 11, wobei das Kopplungsmittel in einem Verbundmaterial verwendet wird, vorzugsweise einem Verbundmaterial, das ein nicht-polares Polymer und mindestens einen Bestandteil, der damit inkompatibel ist, umfasst.

13. Verbundmaterial, umfassend ein Kopplungsmittel, wobei das Kopplungsmittel das g-LLDPE nach einem der Ansprüche 1 bis 9 umfasst, vorzugsweise daraus besteht.

14. Verbundmaterial nach Anspruch 13, weiter umfassend ein nicht-polares Polymer und mindestens einen Bestandteil, der damit inkompatibel ist.

15. Verfahren zum Produzieren eines gepfropften LLDPE, umfassend:
a. Produzieren eines LLDPE nach einem der Ansprüche 1 bis 9 in einem Prozess, umfassend die Schritte:
(i) Homopolymerisieren von Ethylen oder Copolymerisieren von Ethylen und mindestens einem α-Olefin-Comonomer in einer ersten Polymerisationsstufe in Gegenwart eines Ziegler-Natta-Katalysators, um ein erstes Ethylenhomo- oder - copolymer zu produzieren;
(ii) Copolymerisieren von Ethylen und mindestens einem α-Olefin-Comonomer in einer zweiten Polymerisationsstufe in Gegenwart des ersten Ethylenhomo- oder - copolymers und des gleichen Ziegler-Natta-Katalysators wie Schritt (i), um das LLDPE, umfassend das erste Ethylenhomo- oder -copolymer und ein zweites Ethylencopolymer, zu produzieren,
wobei der Comonomergehalt des zweiten Ethylencopolymers der gleiche oder höher ist als der Comonomergehalt des ersten Ethylenhomo- oder -copolymers, und
wobei die erste Polymerisationsstufe in einem oder zwei Polymerisationsschritten ausgeführt werden kann, vorzugsweise in einem Schritt in einem Schlaufenreaktor, und der zweite Polymerisationsschritt in einem Gasphasenreaktor ausgeführt wird; und
b. Pfropfen des aus dem Polymerisationsreaktor erhaltenen LLDPE mit einem sauren Pfropfmittel, vorzugsweise Maleinsäureanhydrid.

16. Verfahren nach Anspruch 15, wobei das erste Ethylenhomo- oder -copolymer eine Dichte von 920 bis 980 kg/m³ und/oder eine Schmelzflussrate MFR₂ von mindestens 10g/10 min aufweist.

## Revendications

1. Polyéthylène basse densité linéaire multimodal (LLDPE) qui a été greffé avec un agent de greffage acide pour former un LLDPE greffé (g-LLDPE), dans lequel ledit LLDPE est un copolymère d'éthylène et d'au moins un comonomère d'a-oléfine, dans lequel la densité dudit LLDPE se situe dans la plage de 915 à 950 kg/m³, de préférence 918 à 940 kg/m³, dans lequel ledit LLDPE est préparé en utilisant un catalyseur Ziegler-Natta et dans lequel ledit LLDPE présente un MFR₂ de 0,05 à 50 g/10 min, de préférence 0,05 à 10 g/10 min.

2. LLDPE selon la revendication 1, dans lequel le LLDPE présente un MFR₂ de 0,05 à < 1g/10 min, de préférence 0,06 à 0,9 g/10 min, plus préférentiellement 0,07 à 0,8 g/10 min, tel que 0,08 à 0,6 g/10 min.

3. LLDPE selon l'une quelconque des revendications 1 à 2, dans lequel la viscosité à l'état fondu à cisaillement nul η₀ (mesurée selon ISO 6721-1 et -10 à des fréquences de 0,05 rad/s et à 190°C) du LLDPE est de 10 000 Pa.s à 70 000 Pa.s, de préférence 15 000 Pa.s à 60 000 Pa.s.

4. LLDPE selon l'une quelconque des revendications 1 à 3, dans lequel ledit LLDPE est produit sur site lors d'un processus de polymérisation à étages multiples.

5. LLDPE selon l'une quelconque des revendications 1 à 4, dans lequel ledit LLDPE est bimodal.

6. LLDPE selon l'une quelconque des revendications 1 à 5, dans lequel le au moins un comonomère d'a-oléfine est une alpha-oléfine en C₄-C₈, de préférence le 1-butène ou le 1-hexène.

7. LLDPE selon l'une quelconque des revendications 1 à 6, dans lequel ledit LLDPE comprend
i) une fraction de poids moléculaire bas qui est un homopolymère d'éthylène ou un copolymère d'éthylène et au moins un comonomère d'a-oléfine et
ii) une fraction de poids moléculaire élevé qui est un copolymère d'éthylène et au moins un comonomère d'a-oléfine, dans lequel la teneur en comonomère de la fraction de poids moléculaire élevé ii) est identique ou supérieure à la fraction de poids moléculaire bas i).

8. LLDPE selon l'une quelconque des revendications 1 à 7, dans lequel ledit LLDPE est greffé avec un anhydride maléique.

9. LLDPE selon l'une quelconque des revendications 1 à 8, dans lequel ledit g-LLDPE est destiné à rendre compatibles des matériaux composites comprenant au moins un polymère non polaire et au moins un matériau qui est incompatible avec le polymère non polaire.

10. Agent de couplage comprenant un polyéthylène basse densité linéaire multimodal (LLDPE) qui a été greffé avec un agent de greffage acide pour former un LLDPE greffé (g-LLDPE), dans lequel ledit LLDPE est un copolymère d'éthylène et d'au moins un comonomère d'a-oléfine, dans lequel la densité dudit LLDPE se situe dans la plage de 915 à 950 kg/m³, de préférence 918 à 940 kg/m³, dans lequel ledit LLDPE est préparé en utilisant un catalyseur Ziegler-Natta et dans lequel ledit LLDPE présente un MFR₂ de 0,05 à 50 g/10 min, dans lequel ledit LLDPE est le seul composant polymère dans l'agent de couplage.

11. Utilisation du g-LLDPE selon l'une quelconque des revendications 1 à 9 en tant qu'agent de couplage, de préférence dans laquelle ledit LLDPE est le seul composant polymère dans l'agent de couplage.

12. Utilisation selon la revendication 11, dans laquelle ledit agent de couplage est utilisé dans un matériau composite, de préférence un matériau composite comprenant un polymère non polaire et au moins un constituant qui est incompatible avec celui-ci.

13. Matériau composite comprenant un agent de couplage, dans lequel ledit agent de couplage comprend, de préférence est constitué par, le g-LLDPE selon l'une quelconque des revendications 1 à 9.

14. Matériau composite selon la revendication 13, comprenant en outre un polymère non polaire et au moins un constituant qui est incompatible avec celui-ci.

15. Procédé pour produire un LLDPE greffé comprenant :
a. la production d'un LLDPE selon l'une quelconque des revendications 1 à 9, dans un procédé comprenant les étapes consistant à :
(i) homopolymériser de l'éthylène ou copolymériser de l'éthylène et au moins un comonomère d'a-oléfine dans un premier étage de polymérisation en présence d'un catalyseur Ziegler-Natta pour produire un premier homopolymère ou copolymère d'éthylène ;
(ii) copolymériser de l'éthylène et au moins un comonomère d'a-oléfine dans un second étage de polymérisation en présence du premier homopolymère ou copolymère d'éthylène et du même catalyseur Ziegler-Natte qu'à l'étape (i), pour produire ledit LLDPE comprenant le premier homopolymère ou copolymère d'éthylène et un second copolymère d'éthylène,
dans lequel la teneur en comonomère du second copolymère d'éthylène est identique ou supérieure, de préférence supérieure à la teneur en comonomère du premier homopolymère ou copolymère d'éthylène, et
dans lequel le premier étage de polymérisation peut être réalisé en une ou deux étapes de polymérisation, de préférence en une étape dans un réacteur en boucle, et le second étage de polymérisation est réalisé dans un réacteur en phase gazeuse ; et
b. greffer le LLDPE obtenu à partir du réacteur de polymérisation avec un agent de greffage acide, de préférence un anhydride maléique.

16. Procédé selon la revendication 15, dans lequel le premier homopolymère ou copolymère d'éthylène présente une densité de 920 à 980 kg/m³ et/ou un indice de fluidité à chaud MFR₂ d'au moins 10 g/10 min.
